(19) Europäisches Patentamt
European Patent Office
Office européen des brevets

(11) EP 3 603 848 A1

(12) EUROPEAN PATENT APPLICATION
published in accordance with Art. 153(4) EPC

(43) Date of publication:
05.02.2020 Bulletin 2020/06

(51) Int Cl.:
B22C 9/06 (2006.01)  B22C 9/00 (2006.01)
B22D 17/22 (2006.01)  G01N 3/32 (2006.01)

(21) Application number: 18770376.4

(22) Date of filing: 08.03.2018

(86) International application number:
PCT/JP2018/008922

(87) International publication number:
WO 2018/173766 (27.09.2018 Gazette 2018/39)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 24.03.2017 JP 2017058648

(71) Applicant: Hitachi Metals, Ltd.
Tokyo 108-8224 (JP)

(72) Inventors:
• MORI, Haruyuki
Tokyo 108-8224 (JP)
• SATO, Masataka
Tokyo 108-8224 (JP)
• NAGASAWA, Masayuki
Tokyo 108-8224 (JP)

(74) Representative: Becker Kurig Straus
Patentanwälte
Bavariastrasse 7
80336 München (DE)

(54) MOLD LIFE PREDICTION METHOD

(57) Provided is a method for predicting the thermal fatigue life of a mold. The method for predicting the thermal fatigue life of a mold made of a mold material having hardness H, in which heating in contact with a workpiece and cooling after the contact with the workpiece are repeated, the method comprising: calculating the temperature distribution of the mold heated through the contact with the workpiece; calculating a thermal stress distribution generated in the mold on the basis of the temperature distribution; calculating, from the thermal stress distribution, a thermal stress maximum value $\sigma_{h\_MAX}$ at a position x of the mold and a temperature $T_h$ at the thermal stress maximum value $\sigma_{h\_MAX}$; calculating, by using the mold material having the hardness H, a yield strength $\sigma_y(T_h)$ at the temperature $T_h$ and the contraction $\varphi(T_c)$ at the temperature $T_c$ of the mold when cooled; and calculating a thermal fatigue life N at the position x of the mold by assigning $\sigma_{h\_MAX}$, $\sigma_y(T_h)$, and $\varphi(T_c)$ to the relational formula:

$$N=\{C_1(\sigma_y(T_h)/\sigma_{h\_MAX})^m \cdot \ln(1-\varphi(T_c))^{-1}-C_2\}^n$$

($C_1$, $C_2$, m, and n are constants).

START

(PROCESS A)
OBTAIN TEMPERATURE DISTRIBUTION OF MOLD (ALL PROCESSES DURING CASTING)

(PROCESS B)
OBTAIN THERMAL STRESS DISTRIBUTION FROM TEMPERATURE DISTRIBUTION OF MOLD

(PROCESS C)
EXTRACT THERMAL STRESS MAXIMUM VALUE $\sigma_{h\_MAX}$ AT ANY POSITION x ON MOLD AND TEMPERATURE $T_h$ AT THAT TIME FROM OBTAINED THERMAL STRESS DISTRIBUTION

(PROCESS D)
OBTAIN YIELD STRENGTH $\sigma_y(T_h)$ AT TEMPERATURE $T_h$ AND CONTRACTION $\varphi(T_c)$ AT TEMPERATURE $T_c$ OF MOLD WHEN COOLED USING MOLD MATERIAL HAVING HARDNESS H

(PROCESS E)
OBTAIN LIFESPAN OF MOLD AT ANY POSITION x ON MOLD BY ASSIGNING THERMAL STRESS MAXIMUM VALUE $\sigma_{h\_MAX}$ AND YIELD STRENGTH $\sigma_y(T_h)$ AT TEMPERATURE $T_h$ AT THAT TIME AND CONTRACTION $\varphi(T_c)$ AT TEMPERATURE $T_c$ OF MOLD WHEN COOLED TO RELATIONAL FORMULA OF THERMAL FATIGUE LIFESPAN

END

FIG. 1

EP 3 603 848 A1

**Description**

[Technical Field]

The present invention relates to a method of predicting a thermal fatigue life of a mold.

[Background Art]

In a mold whose work surface is used in contact with a workpiece with a high temperature such as a die-casting mold or a hot forging mold, since heating due to contact with the workpiece and cooling with a water-soluble mold release agent and a lubricant are performed, compression and tension thermal stress is applied to the surface of the mold. Thus, in an actual operation, since this thermal stress is repeatedly applied, thermal fatigue cracks occur in the surface of the mold, and, for example, on the work surface of the mold, the cracks are transferred to the workpiece. The transfer of cracks gradually becomes severe and when the mold becomes unusable, the mold is discarded. In particular, in a die-casting mold, cracks due to thermal fatigue are the most common reason for discarding, and it is strongly desired to improve a thermal fatigue life thereof.

In the related art, increasing the hardness of the mold and applying a mold material with improved high temperature strength were used in order to solve such problems, and the effect has actually been improved in some cases. However, since the relationships of the material properties and thermal stress load of a mold with a thermal fatigue life of the mold were unknown, it was unknown how long the life would be lengthened without actual application thereof. Therefore, the life was not lengthened as long as expected, trial and error were repeated, and time and cost were required for improvement in some cases.

Therefore, a method of predicting a thermal fatigue life of a mold according to material properties of the mold and a thermal stress distribution generated in the mold during use has been proposed (Patent Literature 1). That is, in the method, using a temperature $T_h$ and a thermal stress $\sigma_h$ during heating at a predetermined position x on the mold obtained according to the thermal stress distribution, a yield strength $\sigma_y(T_h)$ at a predetermined mold hardness at the temperature $T_h$ of the mold material and a contraction $\varphi(T_c)$ at a predetermined mold hardness at a temperature $T_c$ during cooling, according to the formula $N=\{C_1(\sigma_y(T_h)/\sigma_h)^m \cdot \ln(1-\varphi(T_c))^{-1}-C_2\}^n$, a thermal fatigue life N at a predetermined position x on the mold is predicted ($C_1$, $C_2$, m, and n are constants).

[Citation List]

[Patent Literature]

[Patent Literature 1]
Japanese Patent No. 4359794

[Summary of Invention]

[Technical Problem]

According to the method of Patent Literature 1, it is possible to efficiently find a hardness and a mold material of a mold suitable for improvement in a desired life without repeating prototyping of the mold, and thus it is possible to reduce time and cost consumed for improving a life of the mold.

However, in the case of Patent Literature 1, there is room for improvement in terms of increasing the accuracy of a predicted life of a mold with respect to an actual life of the mold.

An objective of the present invention is to provide a method of accurately predicting a thermal fatigue life of a mold.

[Solution to Problem]

The present invention is a method of predicting a thermal fatigue life of a mold which is made of a mold material having a hardness H and on which heating during contact with a workpiece and cooling after contact with a workpiece are repeated, which includes obtaining a temperature distribution of a mold heated during contact with a workpiece; obtaining a distribution of thermal stress occurring in the mold according to the temperature distribution; obtaining a thermal stress maximum value $\sigma_{h\_MAX}$ at a position x on the mold and a temperature $T_h$ at the thermal stress maximum value $\sigma_{h\_MAX}$ according to the thermal stress distribution; obtaining a yield strength $\sigma_y(T_h)$ at the temperature $T_h$ and a contraction $\varphi(T_c)$ at a temperature $T_c$ of the mold when it is cooled using the mold material having a hardness H; and substituting $\sigma_{h\_MAX}$, $\sigma_y(T_h)$ and $\varphi(T_c)$ into the following relational formula, and thereby obtaining a thermal fatigue life N at a position x on the mold:

$$N=\{C_1(\sigma_y(T_h)/\sigma_{h\_MAX})^m \cdot \ln(1-\varphi(T_c))^{-1}-C_2\}^n$$

($C_1$, $C_2$, m, and n are constants).

In the present invention, preferably, the temperature distribution of the mold and the distribution of thermal stress occurring in the mold are obtained whenever a use time of the mold reaches a time of 0.5 seconds or less

In addition, in the present invention, preferably, the position x on the mold is on a work surface having a corner radius of 2.0 mm or less.

[Advantageous Effects of Invention]

According to the present invention, it is possible to predict a thermal fatigue life of a mold with accuracy.

[Brief Description of Drawings]

Fig. 1 is a flowchart showing an example of a method of predicting a life of a mold according to the present invention.
Fig. 2 is a diagram showing a schematic partial cross-section obtained by dividing a mold into meshes using a finite element method and an example of a temperature distribution in the cross section.
Fig. 3 is a diagram showing a schematic partial cross-section obtained by dividing a mold into meshes using a finite element method and an example of a thermal stress distribution in the cross section.
Fig. 4 is a graph chart showing a relationship of transitions of a temperature and thermal stress at a specific position on a mold.
Fig. 5 is a diagram showing a shape of a mold used in an example.
Fig. 6 is an example of a temperature distribution diagram of a work surface of a mold which is created from a temperature distribution of an example.
Fig. 7 is an example of a thermal stress distribution diagram of a work surface of a mold which is created from a thermal stress distribution of an example.
Fig. 8 is a cross-sectional diagram showing cracks occurring in a V groove when a mold reaches a thermal fatigue life in actual die-casting using a mold used in an example.

[Description of Embodiments]

A feature of the present invention is that, for a value of a "thermal stress $\sigma_h$" used for obtaining a thermal fatigue life N at any position x on a mold, "the highest value" that is extracted from a thermal stress $\sigma_h$ generated when the mold is heated is used.

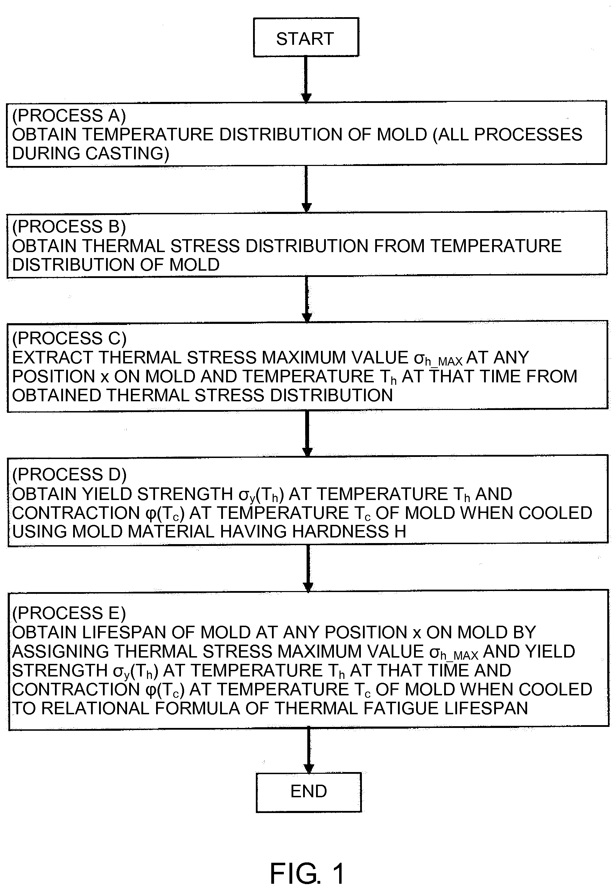

Fig. 1 shows all processes of a method of predicting a life of a mold according to one example of the present invention. The processes will be described below in detail.

(a) <Obtaining a temperature distribution of a mold (process A)>

First, it is necessary to know a hardness H of a mold in order to obtain a yield strength and a contraction of a mold material constituting a mold to be described below. Thus, during use of a mold which is made of a mold material having the hardness H and on which heating during contact with a workpiece and cooling after contact with a workpiece are repeated, a temperature distribution of the mold that is heated during contact with a workpiece is obtained. The hardness H can be a value at room temperature. Thus, for example, in the case of a die-casting mold, the temperature distribution is a series of temperature distributions of a mold from a state in which the mold is heated by injecting a molten metal into a cavity of the die-casting mold to a state in which a die-casting part after casting is removed from the cavity and the mold is cooled. The temperature distribution can be obtained by numerical calculation, for example, a finite difference method or a finite element method. In this case, as a premise for calculating a temperature distribution, values of physical properties of a mold material such as specific heat and thermal conductivity are used as necessary.

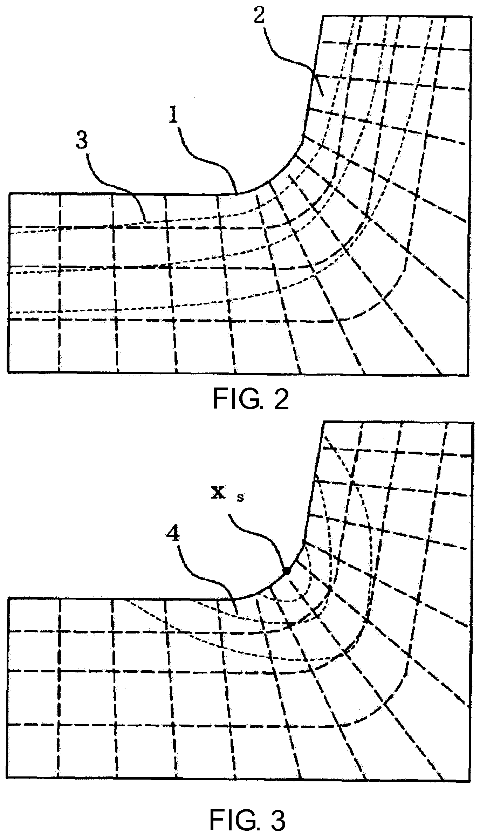

As an example, there is a method of obtaining a temperature distribution by the finite element method. Fig. 2 is a temperature distribution example of a cross section of a stress concentration part (recess) when a mold 1 is divided into meshes with split elements 2. The temperature distribution is indicated by a temperature isopleth 3. First, the entire mold is divided into meshes and heat load conditions are set. For a heat load, a heat transfer coefficient and an atmosphere temperature can be set and a heat flux can be set. In Fig. 2, for simplicity, the stress concentration part is shown two-dimensionally, but it can be three-dimensionally analyzed.

Next, heat transfer analysis of each element is performed, and a temperature distribution diagram is created from a calculation result. In this case, in order to improve the accuracy of predicting a life, it is preferable to optimize the calculation result by using the temperature that is actually measured in an actual mold for a temperature of the mold obtained in the calculation result. For example, it is possible to use a temperature that is actually measured on the surface of the actual mold. In order to measure a temperature of the surface of the actual mold, for example, a device configured to measure a temperature without contact such as an infrared thermography can be used. When the temperature of the mold obtained in the calculation result is different from the measured temperature, the heat load conditions can be re-examined and re-calculated.

(b) <Obtaining a thermal stress distribution from the temperature distribution of the mold obtained in the process A (process B)>

Based on the temperature distribution diagram (Fig. 2), a distribution of thermal stress occurring in the mold is obtained by numerical calculation, for example, a finite element method. In this case, as a premise for calculating a thermal stress distribution, values of physical properties of the mold material such as various coefficients and a coefficient of linear expansion in the relationship between stress and strain are used as necessary.

First, since a model of the mold 1 is divided into meshes, a constraint condition is set for this. In this constraint condition, for example, according to a fixed state from the surroundings of the mold, a constraint direction or the like can be set for each side of the split elements 2.

Then, thermal stress analysis of the split elements 2 is performed, and a thermal stress distribution diagram can be created from the calculation result. Fig. 3 shows an example of the obtained thermal stress distribution diagram. The thermal stress distribution is indicated by a thermal stress isopleth 4. Further, the position "$x_s$" indicates a stress concentration part.

(c) <Obtaining a thermal stress maximum value $\sigma_{h\_MAX}$ and a temperature $T_h$ at the thermal stress maximum value $\sigma_{h\_MAX}$ at any position x on the mold according to the thermal stress distribution obtained in the process B (process C)>

The method of Patent Literature 1 is very beneficial in predicting a life of a mold and selecting a hardness and a mold material of a mold suitable for increasing a desired life of the mold. However, in the method of Patent Literature 1, at any position x on the mold, for example, using a "time at which the temperature becomes the highest" of the mold during use of the mold as a reference, a life is computed from a relationship between a pair of a temperature field and a stress field generated "at the same time" as the time at which the temperature becomes the highest. In this case, in order to improve the accuracy of predicting a life of a mold, it is effective to actually designate the thermal stress $\sigma_h$ used for the computation as "the highest value" of thermal stress generated during heating of the mold. Thereby, in an actual mold, a time at which the temperature becomes the highest at any position x differs for each position x. In addition, the time at which the temperature becomes the highest does not necessarily match a time at which the thermal stress becomes a maximum at the position x.

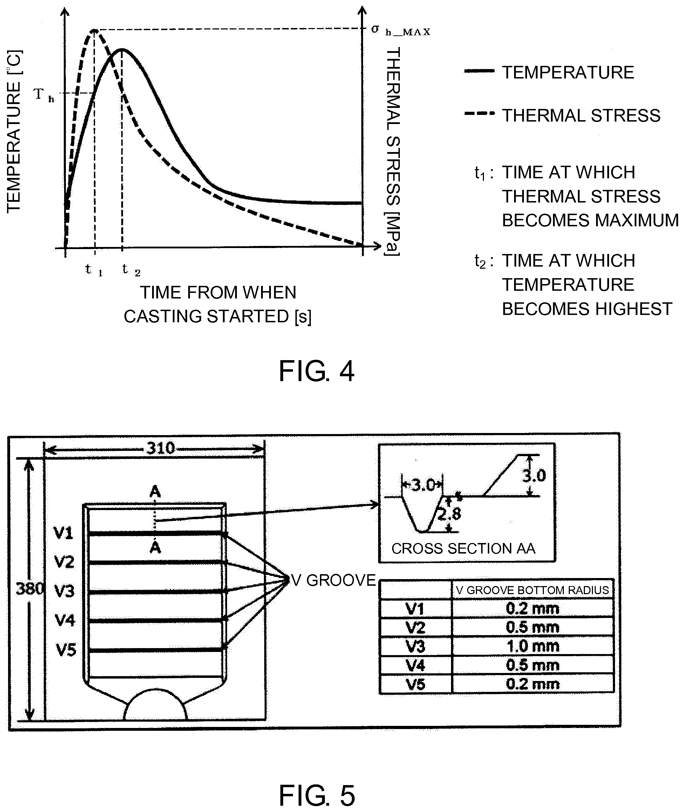

As an example, Fig. 4 shows a relationship of transitions of a temperature and thermal stress during use at a specific position on a surface (cavity surface) of a die-casting mold. The horizontal axis represents a time after the casting starts and the vertical axis represents the temperature and a thermal stress value. After the casting starts, the temperature of the surface of the mold increases and the thermal stress value also increases, and the thermal stress has a maximum value at a time $t_1$. However, the temperature then becomes a maximum at a time $t_2$. Since the thermal stress is determined exclusively by the surrounding temperature field, the thermal stress does not necessarily have a maximum value at a time at which the temperature becomes the highest at a specific position. Therefore, for example, after a series of thermal stresses occurring during casting is calculated, an operation of searching for and extracting the maximum value of the thermal stresses at positions at which a life is predicted is necessary.

In the method of predicting a life of a mold of the present invention, a relational formula to be described below is prepared, a value such as the thermal stress $\sigma_h$ is substituted to obtain a thermal fatigue life N, and this life N varies according to the substituting value of the thermal stress $\sigma_h$. Therefore, in this point, in order to improve the accuracy of predicting a life of a mold, regarding a value of the thermal stress $\sigma_h$ occurring in the mold during use, it is desirable to correctly select a maximum value thereof. Thus, for this purpose, without simply selecting a thermal stress value $\sigma_h$ at a time at any position x on the mold using the time at which the temperature during use of the mold becomes the highest as a reference, it is necessary to compute a series of temperature fields and stress fields during its use cycle and extract a maximum value $\sigma_{h\_MAX}$ of the thermal stress from a series of thermal stresses $\sigma_h$. Further, the above temperature is not simply set to the above highest temperature, but it is necessary that it be a temperature $T_h$ when the value of the thermal stress is a maximum value $\sigma_{h\_MAX}$.

Here, for example, as shown in Fig. 4, in the relationship of transitions of the temperature and the thermal stress of the mold during use, a difference between the time $t_1$ when the thermal stress becomes a maximum and the time $t_2$ when the temperature becomes the highest may be small depending on a use form of the mold and the like. In such a case also, in order to improve the accuracy of predicting a life of a mold, it is effective if such a small difference can be recognized. In this case, in order to recognize such a small difference, obtaining the temperature distribution of the mold obtained in the process A and the distribution of thermal stress occurring in the mold obtained in the process B for each short elapsed time in a series of use times of the mold is effective. Thus, for example, the short elapsed time is preferably 0.5 seconds or less, more preferably 0.4 seconds or less, and most preferably 0.3 seconds or less. Thus, 0.2 seconds or less and 0.1 seconds or less are more preferable in that order.

(d) <Obtaining a yield strength $\sigma_y(T_h)$ at the temperature $T_h$ and a contraction $\varphi(T_c)$ at a temperature $T_c$ of the mold when the mold is cooled using a mold material having a hardness H constituting the mold (process D)>

Thus, in the method of predicting a life of a mold of the present invention, in order to obtain a thermal fatigue life N using a relational formula to be described below, the yield strength $\sigma_y(T_h)$ and the contraction $\varphi(T_c)$ of the mold are required. In this case, the yield strength $\sigma_y(T_h)$ is a value at the temperature $T_h$. In addition, the contraction $\varphi(T_c)$ is a value at the temperature $T_c$ during cooling. Values of the yield strength $\sigma_y(T_h)$ and the contraction $\varphi(T_c)$ can be obtained by separately preparing a mold material having a hardness H. In this case, the hardness H can be set to a value at room temperature. Then, the values of the yield strength $\sigma_y(T_h)$ and the contraction $\varphi(T_c)$ that are measured in advance at various temperatures may be stored in a mechanical property database.

Here, the temperature $T_c$ during cooling can be a surface temperature at a position x on the mold of which a life is predicted, for example, when an upper mold and a lower mold are opened, when the molded product is removed from the mold, when the mold is cooled, or the like in a process of removing a molded product (die-cast part) from the mold. In such a case, a surface temperature of the mold can be actually measured and this actual measurement value can be used. In addition, according to the finite element method or the like, in the same manner as above, calculation results can be used.

(e) <Obtaining a thermal fatigue life N at a position x on the mold by substituting values of $\sigma_{h\_MAX}$, $\sigma_y(T_h)$ and $\varphi(T_c)$ into the relational formula

$$N=\{C_1(\sigma_y(T_h)/\sigma_{h\_MAX})^m \cdot \ln(1-\varphi(T_c))^{-1}-C_2\}^n$$

($C_1$, $C_2$, m, and n are constants) (process E)>

Then, finally, values of the thermal stress maximum value $\sigma_{h\_MAX}$ at a position x on the mold, the yield strength $\sigma_y(T_h)$ at the temperature $T_h$ at that time, and the contraction $\varphi(T_c)$ at the temperature $T_c$ during cooling which are obtained in the processes A to D are substituted into a relational formula of a thermal fatigue life N, material properties, and thermal stress, and a life of the mold can be obtained. In this case, as the relational formula, a formula in Patent Literature 1 can be used. However, in the present invention, since the value of the thermal stress $\sigma_h$ in the relational formula is set as the "maximum value $\sigma_{h\_MAX}$" and the value of the yield strength $\sigma_y(T_h)$ is set as the "value at the temperature $T_h$ at which the thermal stress $\sigma_{h\_MAX}$ is reached," the accuracy of predicting a life of a mold is improved.

In the present invention, for example, when the hardness of the mold is variously changed and realized, a relationship between the hardness and the life of the mold can be obtained, and an "optimal hardness" for a predetermined mold can be proposed.

While an example in which a life of "one mold" is predicted under specific mold shape and use conditions is shown in an example of the present invention, it is possible to obtain a relationship between molds made of various mold materials and lifes when lifes of a "plurality of molds" made of different mold materials are predicted under specific mold shape and use conditions. In addition, when a life of one mold is predicted by changing a mold shape (for example, a curvature radius of a corner part) and a use condition (such as a temperature of a workpiece), it is also possible to obtain a relationship between a mold shape and a use condition, and a life. Thereby, it is possible to propose an "optimal mold material" for a predetermined mold shape and use condition.

The present invention is most suitable for predicting a life of a mold in which a time at which the thermal stress becomes a maximum and a time at which the temperature becomes the highest at any position on the mold during use as described above are different from each other. Thus, such a time lag may occur in, for example, a corner (corner part) of a work surface, within the stress concentration part of the mold. Thus, in the present invention, for example, a position x on the mold is preferably on a work surface having a corner radius (corner R) of 2.0 mm or less. More preferably, 1.0 mm or less is used.

Examples

Performing die-casting according to conditions in Table 1 was planned and a thermal fatigue life (the number of shots in which cracks occurred) of a mold when die-casting was actually performed was predicted. A mold used is as shown in Fig. 5 and it had a work surface having corner radiuses (bottom radius) with 5 V grooves.

[Table 1]

| Mold clamping force | | 350 tons |
|---|---|---|
| Casting cycle | | 51 seconds |
| Mold | Material | JIS-SKD61 |
| | Hardness | 44 HRC (room temperature) |
| | Shape | 380×310×70 mm (as shown in Fig. 5) |
| Molten metal | Type | ADC 12 |
| | Temperature | 680 °C |

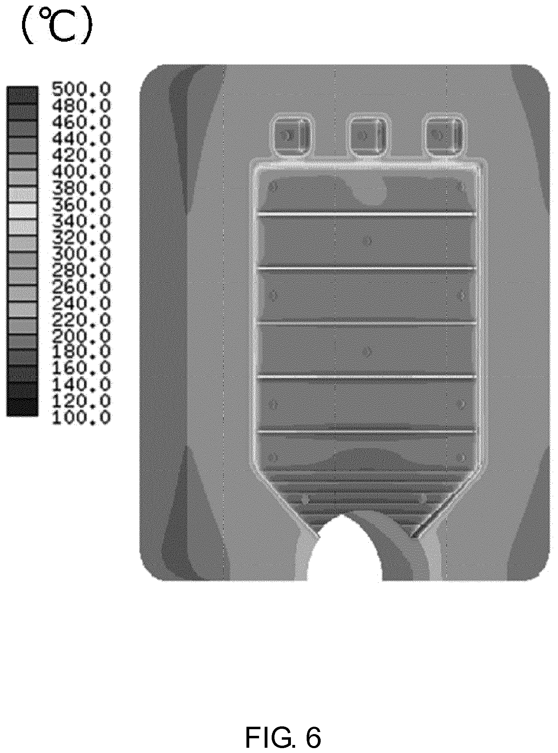

First, according to the above process (a), a temperature distribution of the mold in a series of casting cycles was obtained (process A). As an example of the temperature distribution diagram created from this calculation result, Fig. 6 shows a temperature distribution diagram of the work surface when 0.5 seconds has elapsed from when injection of a molten metal into a cavity was completed.

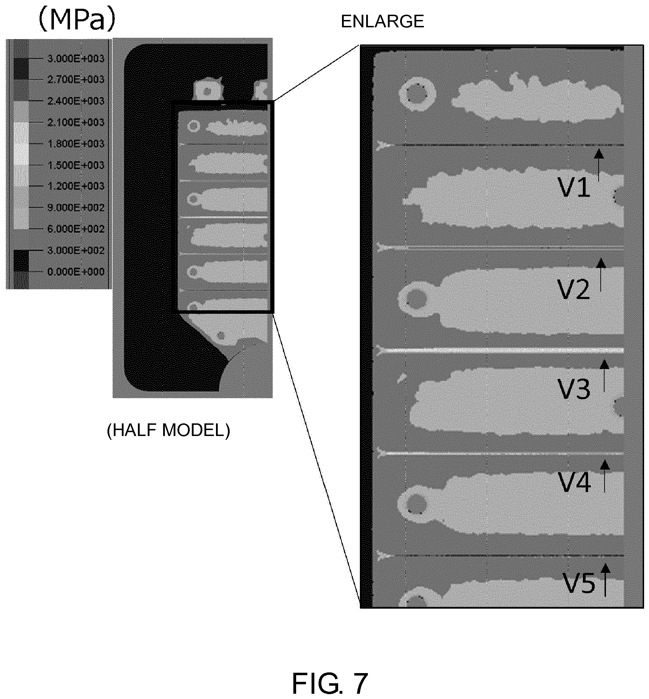

Next, according to the above process (b), a distribution of thermal stress occurring in the mold was obtained from the temperature distribution (process B). As an example of the thermal stress distribution diagram created from this calculation result, Fig. 7 shows a thermal stress distribution diagram of the work surface when 0.5 seconds has elapsed from when injection of a molten metal into a cavity was completed.

Then, according to the above process (c), according to the thermal stress distribution obtained above, as a position x on the mold, at positions of the bottom of V grooves (VI to V5) provided on the work surface of the mold as the stress concentration part, a thermal stress maximum value $\sigma_{h\_MAX}$ and the temperature $T_h$ at the thermal stress maximum value $\sigma_{h\_MAX}$ were obtained (process C). In this case, as a comparative example, in order to perform a method of predicting a thermal fatigue life of a mold in Patent Literature 1, at positions of the bottom of V grooves, a temperature maximum value $T_{h\_MAX}$ and the thermal stress $\sigma_h$ at the temperature maximum value $T_{h\_MAX}$ were obtained.

In addition, according to the above process (d), using a mold material (JIS-SKD61) having a hardness of 44 HRC at room temperature, the yield strength $\sigma_y(T_h)$ at the temperature $T_h$ and a contraction $\varphi(T_c)$ at the temperature $T_c$ of the mold that was cooled were obtained. In this case, as a numeric value used in the comparative example, a yield strength $\sigma_y(T_{h\_MAX})$ at the temperature $T_{h\_MAX}$ was also obtained. The results regarding the V grooves are shown in Table 2.

[Table 2]

| | $\sigma_y(T_h)$ (MPa) | $\sigma_y(T_{h\_MAX})$ (MPa) | $T_c$ (°C) | $\phi(T_c)$ (%) |
|---|---|---|---|---|
| V1 | 997 | 997 | 191 | 51.2 |
| V2 | 994 | 991 | 193 | 51.2 |
| V3 | 931 | 931 | 195 | 51.3 |
| V4 | 985 | 985 | 195 | 51.3 |
| V5 | 979 | 979 | 201 | 51.4 |

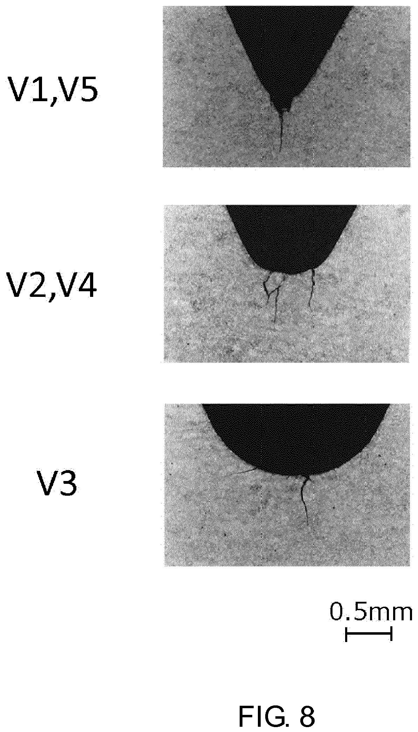

Then, according to the above process (e), values of the constants $C_1$, $C_2$, m, and n of the relational formula of "$N=\{C_1(\sigma_y(T_h)/\sigma_{h\_MAX})^m \cdot \ln(1-\varphi(T_c))^{-1}-C_2\}^n$" were appropriately determined according to a level of cracks when the life was reached shown in Fig. 8, and values of $\sigma_{h\_MAX}$, $\sigma_y(T_h)$ and $\varphi(T_c)$ or values of $\sigma_h$, $\sigma_y(T_{h\_MAX})$, and $\varphi(T_c)$ were substituted into the relational formula, and thereby thermal fatigue lifes N on the bottom with V grooves were obtained by methods of predicting a thermal fatigue life of a mold according to the example of the present invention and the comparative example.

Then, these predicted values of the thermal fatigue life N were compared with a thermal fatigue life N (that is, a thermal fatigue life N when cracks shown in Fig. 8 occurred on the bottom of the V grooves) when die-casting was actually performed under conditions in Table 1. The results are shown in Table 3.

[Table 3]

| | | Elapsed time (s) | | | | | Thermal fatigue life (N) | | |
|---|---|---|---|---|---|---|---|---|---|
| | | 0.31 | 0.40 | 0.50 | 0.60 | 0.74 | Example of present invention | Comparative example | Actual |
| V1 | Temperature (°C) | 396.4 | 402.6 | *1407.2 | 407.2 | 396.8 | 1,232 | 1,232 | 2,130 |
| | Thermal stress (MPa) | 3,277 | 3,440 | *23,503 | 3,425 | 3,211 | | | |
| V2 | Temperature (°C) | 399.2 | 405.0 | 409.6 | *1411.1 | 402.3 | 2,328 | 2,383 | 2,130 |
| | Thermal stress (MPa) | 2,387 | 2,509 | *22,570 | 2,537 | 2,385 | | | |
| V3 | Temperature (°C) | 451.7 | 454.9 | *1455.9 | 449.5 | 427.6 | 3,325 | 3,325 | 3,983 |
| | Thermal stress (MPa) | 1,920 | 1,994 | *22,028 | 1,985 | 1,835 | | | |
| V4 | Temperature (°C) | 403.7 | 409.0 | 413.2 | *1415.8 | 410.7 | 2,055 | 2,055 | 1,553 |
| | Thermal stress (MPa) | 2,496 | 2,624 | 2,704 | *22,711 | 2,579 | | | |
| V5 | Temperature (°C) | 408.9 | 413.8 | 417.4 | *1420.1 | 417.4 | 1,180 | 1,180 | 970 |
| | Thermal stress (MPa) | 3,278 | 3,419 | 3,513 | *23,537 | 3,401 | | | |
| *1: $T_{h\_MAX}$<br>*2: $\sigma_{h\_MAX}$ | | | | | | | | | |

Based on the results in Table 3, at positions of the bottom of all V grooves, in a range of 0.31 to 0.74 seconds after injection of a molten metal into the cavity was completed, the thermal stress maximum value $\sigma_{h\_MAX}$ and the temperature maximum value $T_{h\_MAX}$ were confirmed. Then, according to calculation, an occurrence time of the $\sigma_{h\_MAX}$ and $T_{h\_MAX}$ matched at V grooves except for V2 a time of 0.50 seconds elapsed or 0.60 seconds elapsed after injection of a molten metal was completed, and the occurrence time was shifted at V2. As a result, at V2, in the method of predicting a thermal fatigue life of a mold in the example of the present invention and the method of predicting a thermal fatigue life of a mold in the comparative example, the values of the predicted thermal fatigue life were different from each other. Thereby, the value of the thermal fatigue life obtained in the method of predicting a thermal fatigue life of a mold in the example of the present invention was close to the value of the actual thermal fatigue life.

[Reference Signs List]

1    Mold
2    Split element
3    Temperature isopleth
4    Thermal stress isopleth

**Claims**

1. A method of predicting a thermal fatigue life of a mold which is made of a mold material having a hardness H and on which heating during contact with a workpiece and cooling after contact with a workpiece are repeated, the method comprising:

   obtaining a temperature distribution of a mold heated during contact with a workpiece;
   obtaining a distribution of thermal stress occurring in the mold according to the temperature distribution;
   obtaining a thermal stress maximum value $\sigma_{h\_MAX}$ at a position x on the mold and a temperature $T_h$ at the thermal stress maximum value $\sigma_{h\_MAX}$ according to the thermal stress distribution;
   obtaining a yield strength $\sigma_y(T_h)$ at the temperature $T_h$ and a contraction $\varphi(T_c)$ at a temperature $T_c$ of the mold when it is cooled using the mold material having a hardness H; and
   substituting $\sigma_{h\_MAX}$, $\sigma_y(T_h)$ and $\varphi(T_c)$ into the following relational formula, and thereby obtaining a thermal fatigue life N at a position x on the mold:

$$N=\{C_1(\sigma_y(T_h)/\sigma_{h\_MAX})^m \cdot \ln(1-\varphi(T_c))^{-1} - C_2\}^n$$

   ($C_1$, $C_2$, m, and n are constants).

2. The method of predicting a life of a mold according to claim 1, wherein the temperature distribution of the mold and the distribution of thermal stress occurring in the mold are obtained whenever a use time of the mold reaches a time of 0.5 seconds or less.

3. The method of predicting a life of a mold according to claim 1 or 2, wherein the position x on the mold is on a work surface having a corner radius of 2.0 mm or less.

```
                    ┌─────────────────┐
                    │      START      │
                    └─────────────────┘
                             │
                             ▼
┌──────────────────────────────────────────────────────────────────┐
│ (PROCESS A)                                                        │
│ OBTAIN TEMPERATURE DISTRIBUTION OF MOLD (ALL PROCESSES            │
│ DURING CASTING)                                                    │
└──────────────────────────────────────────────────────────────────┘
                             │
                             ▼
┌──────────────────────────────────────────────────────────────────┐
│ (PROCESS B)                                                        │
│ OBTAIN THERMAL STRESS DISTRIBUTION FROM TEMPERATURE              │
│ DISTRIBUTION OF MOLD                                              │
└──────────────────────────────────────────────────────────────────┘
                             │
                             ▼
┌──────────────────────────────────────────────────────────────────┐
│ (PROCESS C)                                                        │
│ EXTRACT THERMAL STRESS MAXIMUM VALUE $\sigma_{h\_MAX}$ AT ANY    │
│ POSITION x ON MOLD AND TEMPERATURE $T_h$ AT THAT TIME FROM       │
│ OBTAINED THERMAL STRESS DISTRIBUTION                             │
└──────────────────────────────────────────────────────────────────┘
                             │
                             ▼
┌──────────────────────────────────────────────────────────────────┐
│ (PROCESS D)                                                        │
│ OBTAIN YIELD STRENGTH $\sigma_y(T_h)$ AT TEMPERATURE $T_h$ AND   │
│ CONTRACTION $\varphi(T_c)$ AT TEMPERATURE $T_c$ OF MOLD WHEN COOLED │
│ USING MOLD MATERIAL HAVING HARDNESS H                            │
└──────────────────────────────────────────────────────────────────┘
                             │
                             ▼
┌──────────────────────────────────────────────────────────────────┐
│ (PROCESS E)                                                        │
│ OBTAIN LIFESPAN OF MOLD AT ANY POSITION x ON MOLD BY            │
│ ASSIGNING THERMAL STRESS MAXIMUM VALUE $\sigma_{h\_MAX}$ AND YIELD │
│ STRENGTH $\sigma_y(T_h)$ AT TEMPERATURE $T_h$ AT THAT TIME AND   │
│ CONTRACTION $\varphi(T_c)$ AT TEMPERATURE $T_c$ OF MOLD WHEN COOLED │
│ TO RELATIONAL FORMULA OF THERMAL FATIGUE LIFESPAN               │
└──────────────────────────────────────────────────────────────────┘
                             │
                             ▼
                    ┌─────────────────┐
                    │       END       │
                    └─────────────────┘
```

# FIG. 1

FIG. 2

FIG. 3

FIG. 4

FIG. 5

FIG. 6

FIG. 7

V1,V5

V2,V4

V3

0.5mm

FIG. 8

## INTERNATIONAL SEARCH REPORT

| | International application No. |
|---|---|
| | PCT/JP2018/008922 |

**A. CLASSIFICATION OF SUBJECT MATTER**
Int. Cl. B22C9/06(2006.01)i, B22C9/00(2006.01)i, B22D17/22(2006.01)i, G01N3/32(2006.01)i

According to International Patent Classification (IPC) or to both national classification and IPC

**B. FIELDS SEARCHED**

Minimum documentation searched (classification system followed by classification symbols)
Int. Cl. B22C9/06, B22C9/00, B22D17/22, G01N3/32

Documentation searched other than minimum documentation to the extent that such documents are included in the fields searched
Published examined utility model applications of Japan      1922-1996
Published unexamined utility model applications of Japan    1971-2018
Registered utility model specifications of Japan            1996-2018
Published registered utility model applications of Japan    1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2000-246394 A (HITACHI METALS, LTD.) 12 September 2000, entire text & JP 4359794 B2 | 1-3 |
| A | JP 10-175037 A (HITACHI METALS, LTD.) 30 June 1998, entire text (Family: none) | 1-3 |
| A | JP 2006-297429 A (DAIDO STEEL CO., LTD.) 02 November 2006, entire text & US 2006/0230881 A1 & EP 1714717 A1 | 1-3 |

☐ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02.05.2018 | 15.05.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**EP 3 603 848 A1**

## REFERENCES CITED IN THE DESCRIPTION

**Patent documents cited in the description**

- JP 4359794 B